(19) **Europäisches Patentamt**
**European Patent Office**
**Office européen des brevets**

(11) **EP 1 563 176 B1**

(12) **EUROPÄISCHE PATENTSCHRIFT**

(45) Veröffentlichungstag und Bekanntmachung des Hinweises auf die Patenterteilung:
**13.01.2010 Patentblatt 2010/02**

(21) Anmeldenummer: **03775361.3**

(22) Anmeldetag: **15.11.2003**

(51) Int Cl.:
***F02D 31/00*** *(2006.01)*

(86) Internationale Anmeldenummer:
**PCT/EP2003/012786**

(87) Internationale Veröffentlichungsnummer:
**WO 2004/046527 (03.06.2004 Gazette 2004/23)**

(54) **VERFAHREN ZUR DREHZAHL-REGELUNG EINER BRENNKRAFTMASCHINE**

METHOD FOR REGULATING THE SPEED OF AN INTERNAL COMBUSTION ENGINE

PROCEDE POUR REGULER LE REGIME D'UN MOTEUR A COMBUSTION INTERNE

(84) Benannte Vertragsstaaten:
**DE FR GB**

(30) Priorität: **19.11.2002 DE 10253739**

(43) Veröffentlichungstag der Anmeldung:
**17.08.2005 Patentblatt 2005/33**

(73) Patentinhaber: **MTU FRIEDRICHSHAFEN GMBH 88045 Friedrichshafen (DE)**

(72) Erfinder: **DÖLKER, Armin 88090 Immenstaad (DE)**

(56) Entgegenhaltungen:
**DE-A- 19 833 839       DE-A- 19 953 767**
**DE-C1- 10 122 517     US-A- 4 715 339**

**Beschreibung**

Die Erfindung betrifft ein Verfahren zur Drehzahl-Regelung einer Brennkraftmaschine nach dem Oberbegriff von Anspruch 1.

Die Drehzahl einer Antriebseinheit wird typischerweise auf eine Leerlauf- und Enddrehzahl geregelt. Unter Antriebseinheit ist sowohl eine Brennkraftmaschinen-Getriebeeinheit als auch eine Brennkraftmaschinen-Generatoreinheit zu verstehen. Zur Drehzahl-Regelung wird die Drehzahl der Kurbelwelle als Regelgröße erfasst und mit einem Motordrehzahl-Sollwert, der Führungsgröße, verglichen. Die daraus resultierende Regelabweichung wird über einen Drehzahl-Regler in eine Stellgröße für die Brennkraftmaschine, beispielsweise eine Einspritzmenge, gewandelt. Bei einem derartigen Regelkreis besteht ein Problem darin, dass Drehschwingungen, die der Regelgröße überlagert sind, vom Drehzahl-Regler verstärkt werden können. Dies kann zu einer Instabilität des Regelkreises führen.

Dem Problem der Instabilität wird durch ein Drehzahl-Filter im Rückkopplungszweig des Drehzahl-Regelkreises begegnet. Aus der EP 0 059 585 B1 ist ein derartiges Drehzahl-Filter bekannt. Bei diesem werden die Zahnzeiten einer Welle über ein Arbeitsspiel der Brennkraftmaschine erfasst. Unter Arbeitsspiel sind zwei Umdrehungen der Kurbelwelle, entsprechend 720 Grad, zu verstehen. Aus diesen Zahnzeiten wird danach über arithmetische Mittelwertbildung eine gefilterte Zahnzeit berechnet. Aktualisiert wird diese nach jedem Arbeitsspiel.

Diese gefilterte Zahnzeit entspricht dem gefilterten Ist-Drehzahlwert, welcher sodann zur Regelung der Brennkraftmaschine verwendet wird.

Ein Drehzahl-Regelkreis zur Regelung einer Antriebseinheit mit einem derartigen Drehzahl-Filter im Rückkopplungszweig ist beispielsweise aus der DE 199 53 767 C2 bekannt.

Problematisch bei einem Zwei-Umdrehungs-Filter im Rückkopplungszweig ist jedoch, dass ein stabiles Verhalten der Antriebseinheit mit einer Verschlechterung des Lastannahme-Verhaltens einhergeht.

Der Erfindung liegt die Aufgabe zu Grunde einen Drehzahl-Regelkreis in Bezug auf das Lastannahme-Verhalten zu optimieren.

Die Aufgabe wird durch die Merkmale von Anspruch 1 gelöst.
Die Ausgestaltungen hierzu sind in den Unteransprüchen dargestellt.

Die Erfindung sieht vor, dass aus der Ist-Drehzahl der Brennkraftmaschine mittels eines zweiten Filters eine zweite gefilterte Ist-Drehzahl berechnet wird, aus welcher danach eine zweite Regelabweichung berechnet wird. Bei einer dynamischen Zustandsänderung berechnet der Drehzahl-Regler ein leistungsbestimmendes Signal, beispielsweise eine Einspritzmenge, aus der ersten und der zweiten Regelabweichung. Hierbei wird das leistungsbestimmende Signal bei einer dynamischen Zustandsänderung maßgeblich aus der zweiten Regelabweichung bestimmt.

Eine dynamische Zustandsänderung liegt dann vor, wenn eine große Soll-Ist-Abweichung der Drehzahlen vorliegt, beispielsweise bei einer Lastauf- oder Lastabschaltung. Zur schnelleren Erkennung dieses dynamischen Vorgangs ist das zweite Filter z. B. als Mittelwertfilter mit einem Filterwinkel von 90 Grad ausgeführt. Gegenüber dem Zwei-Umdrehungs-Filter liegt zu einem wesentlich früheren Zeitpunkt ein gefilterter Drehzahlwert vor, d. h. die dynamische Zustandsänderung wird schneller detektiert.

Die Erfindung bietet als Vorteil, dass Kupplungen mit niedriger Eigenfrequenz verwendet werden können. Da das zweite Filter eine reine Software-Lösung darstellt, kann es in eine bereits bestehende Motorsteuerungs-Software nachträglich integriert werden.

Bei einer dynamischen Zustandsänderung ist vorgesehen, dass die zweite Regelabweichung auf einen P-Anteil (proportionalen Anteil) oder einen DT1-Anteil des Drehzahl-Reglers einwirkt. Hierzu sind entsprechende Kennlinien vorgesehen.

In den Zeichnungen sind die bevorzugten Ausführungsbeispiele der Erfindung dargestellt. Es zeigen:

Fig. 1    ein Systemschaubild;
Fig. 2    einen Drehzahl-Regelkreis;
Fig. 3    ein Blockschaltbild des Drehzahl-Reglers;
Fig. 4    eine Kennlinie;
Fig. 5    ein Blockschaltbild des Drehzahl-Reglers (zweite Ausführung);
Fig. 6    eine Kennlinie.

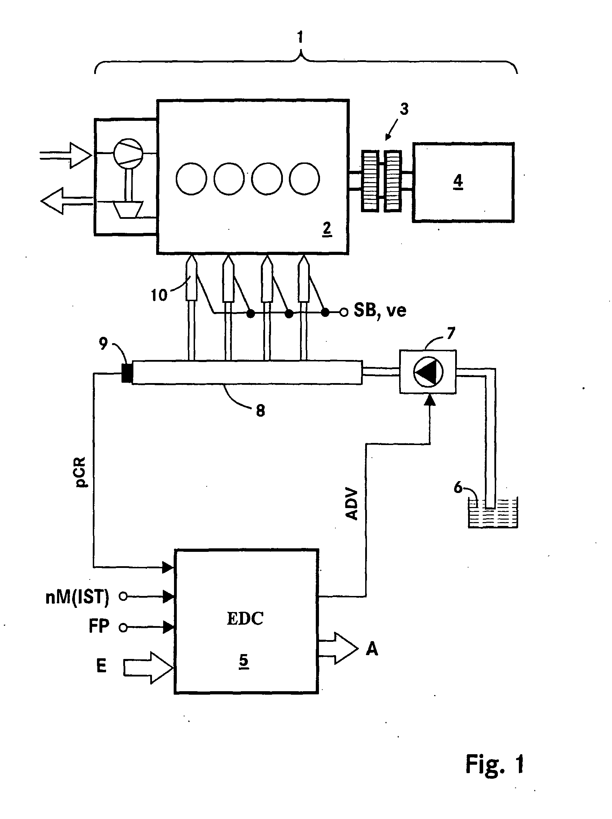

Die Figur 1 zeigt ein Systemschaubild des Gesamtsystems einer Antriebseinheit 1, beispielsweise einer Brennkraftmaschinen-Generatoreinheit. Diese bestehend aus einer Brennkraftmaschine 2 mit einer Motorlast 4. Die Brennkraftmaschine 2 treibt über eine Welle mit einem Übertragungsglied 3 die Motorlast 4 an. Bei der dargestellten Brennkraftmaschine 2 wird der Kraftstoff über ein Common-Rail-System eingespritzt. Dieses umfasst folgende Komponenten: Pumpen 7 mit Saugdrossel zur Förderung des Kraftstoffs aus einem Kraftstofftank 6, ein Rail 8 zum Speichern des Kraftstoffs und Injektoren 10 zum Einspritzen des Kraftstoffs aus dem Rail 8 in die Brennräume der Brennkraftmaschine 2.

Die Betriebsweise der Brennkraftmaschine 2 wird durch ein elektronisches Steuergerät (EDC) 5 geregelt. Das elektronische Steuergerät 5 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb der Brennkraftmaschine 2 relevanten Betriebsdaten in Kennfeldern/Kennlinien appliziert. Über diese berechnet das elektronische Steuergerät 5 aus den Eingangsgrößen die Ausgangsgrößen. In Figur 1 sind exemplarisch folgende Eingangsgrößen dargestellt: ein Raildruck pCR, der mittels eines Rail-Drucksensors 9 gemessen wird, ein Ist-Drehzahl-Signal nM(IST) der Brennkraftmaschine 2, eine Eingangsgröße E und ein Signal FP zur Leistungswunsch-Vorgabe durch den Betreiber. Bei einer Fahrzeug-Anwendung entspricht dies der Fahrpedalstellung. Unter der Eingangsgröße E sind beispielsweise der Ladeluftdruck eines Turboladers und die Temperaturen der Kühl-/Schmiermittel und des Kraftstoffs subsumiert.

In Figur 1 sind als Ausgangsgrößen des elektronischen Steuergeräts 5 ein Signal ADV zur Steuerung der Pumpen 7 mit Saugdrossel und eine Ausgangsgröße A dargestellt. Die Ausgangsgröße A steht stellvertretend für die weiteren Stellsignale zur Steuerung und Regelung der Brennkraftmaschine 2, beispielsweise den Einspritzbeginn SB und ein leistungsbestimmendes Signal ve, entsprechend der Einspritzmenge.

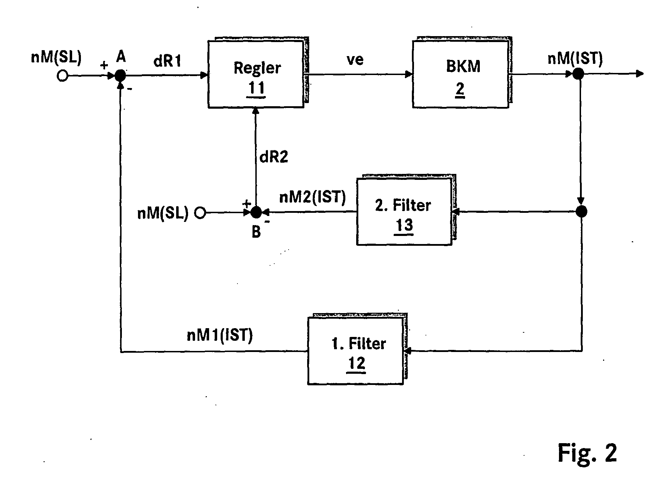

In Figur 2 ist ein Blockschaltbild des Drehzahl-Regelkreises dargestellt. Die Eingangsgröße des Drehzahl-Regelkreises ist eine Soll-Drehzahl nM(SL). Die Ausgangsgröße des Drehzahl-Regelkreises ist die ungefilterte Ist-Drehzahl nM(IST). In einem ersten Rückkopplungszweig ist ein erstes Filter 12 zur Berechnung der ersten Ist-Drehzahl nM1 (IST) aus der aktuellen ungefilterten Ist-Drehzahl nM(IST) vorgesehen. Das erste Filter 12 ist üblicherweise als ein Zwei-Umdrehungs-Filter ausgeführt, d. h. es mittelt die Ist-Drehzahl nM(IST) über ein Arbeitsspiel entsprechend 720 Grad der Kurbelwelle. In einem zweiten Rückkopplungszweig ist ein zweites Filter 13 zur Berechnung einer zweiten Ist-Drehzahl nM2(IST) aus der aktuellen ungefilterten Ist-Drehzahl nM(IST) vorgesehen. Das zweite Filter 13 ist z. B. als ein Mittelwertfilter mit einem Filterwinkel von 90 Grad Kurbelwellen-Winkel verwirklicht. Das zweite Filter 13 besitzt somit eine wesentlich größere Dynamik als das erste Filter 12.

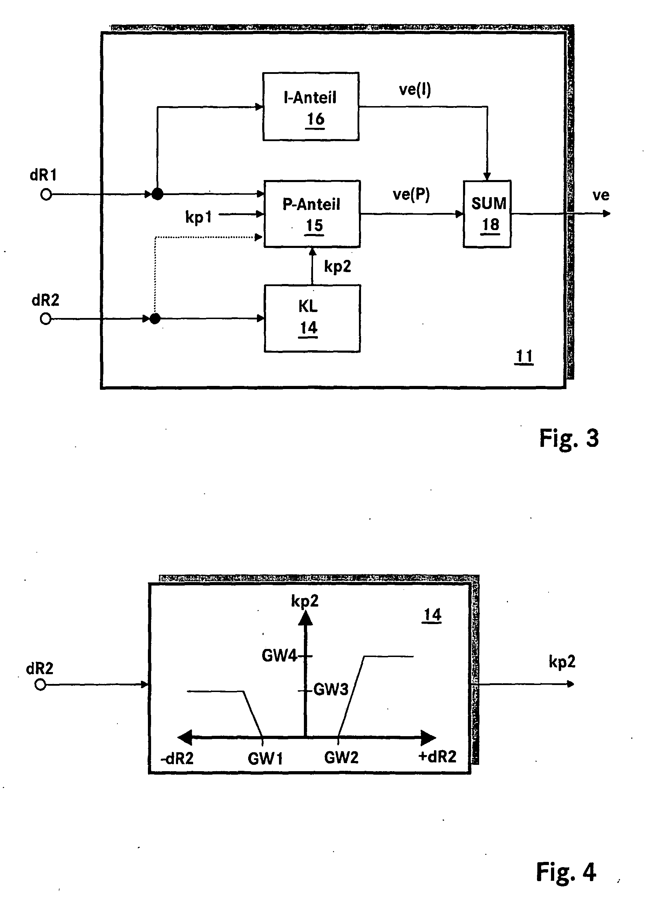

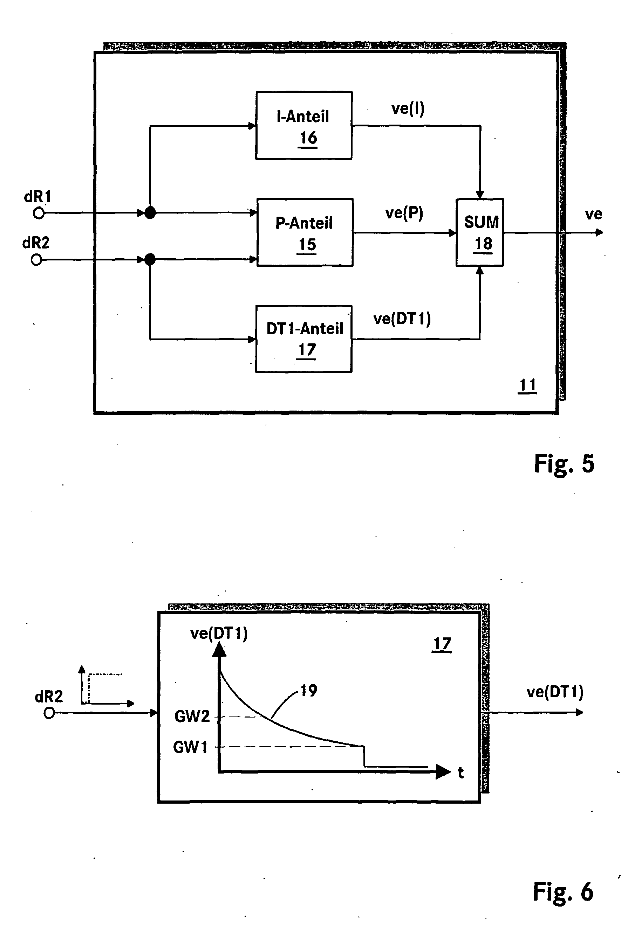

An einer ersten Vergleichsstelle A wird eine erste Regelabweichung dR1 berechnet. Diese bestimmt sich aus der Soll-Drehzahl nM(SL) und der ersten Ist-Drehzahl nM1(IST). Die erste Regelabweichung dR1 ist die Eingangsgröße des Drehzahl-Reglers 11. An einer zweiten Vergleichsstelle B wird eine zweite Regelabweichung dR2 berechnet. Diese bestimmt sich aus der Soll-Drehzahl nM(SL) und der zweiten Ist-Drehzahl nM2(IST). Die zweite Regelabweichung dR2 ist ebenfalls auf den Drehzahl-Regler 11 geführt. Die innere Struktur des Drehzahl-Reglers 11 wird in Verbindung mit der Beschreibung der Figuren 3 bzw. 5 erläutert. Aus den Eingangsgrößen bestimmt der Drehzahl-Regler 11 eine Stellgröße. In Figur 2 ist diese Stellgröße als ein leistungsbestimmendes Signal ve bezeichnet. Das leistungsbestimmende Signal ve stellt die Eingangsgröße dar für die Regelstrecke, hier die Brennkraftmaschine 2. Die Ausgangsgröße der Regelstrecke entspricht der ungefilterten Ist-Drehzahl nM(IST). Damit ist der Regelkreis geschlossen.

Die Erfindung ist in der Form ausgeführt, dass bei einem stationären Zustand der Antriebseinheit der Drehzahl-Regler 11 das leistungsbestimmende Signal ve ausschließlich in Abhängigkeit der ersten Regelabweichung dR1 berechnet. Bei einer dynamischen Zustandsänderung bestimmt der Drehzahl-Regler 11 das leistungsbestimmende Signal ve in Abhängigkeit der ersten Regelabweichung dR1 und der zweiten Regelabweichung dR2.

In Figur 3 ist die innere Struktur des Drehzahl-Reglers 11 in einer ersten Ausführungsform als Blockschaltbild dargestellt. Der Drehzahl-Regler 11 umfasst hierbei einen P-Anteil 15 zur Bestimmung eines proportionalen Anteils ve(P) des leistungsbestimmenden Signals ve, einen I-Anteil 16 zur Bestimmung eines integrierenden Anteils ve(I) des leistungsbestimmenden Signals ve, eine Kennlinie 14 und eine Summation 18. Die erste Regelabweichung dR1 stellt die Eingangsgröße für den P-Anteil 15 und den I-Anteil 16 dar. Die zweite Regelabweichung dR2 ist auf die Kennlinie 14 geführt. Die Ausgangsgröße der Kennlinie 14 entspricht einem Faktor kp2, welcher auf den P-Anteil 15 einwirkt. Eine weitere Eingangsgröße des P-Anteils ist ein Faktor kp1. Die Kennlinie 14 ist in Figur 4 dargestellt. Auf der Abszisse sind Werte der zweiten Regelabweichung dR2 in positiver/negativer Richtung aufgetragen. Die Ordinate entspricht dem Faktor kp2. Auf der Abszisse sind ein erster Grenzwert GW1 und zweiter Grenzwert GW2 eingezeichnet. Bei sehr großen negativen Werten der zweiten Regelabweichung dR2 wird der Faktor kp2 auf einen Wert GW3 begrenzt. Eine negative Regelabweichung liegt dann vor, wenn die zweite Ist-Drehzahl nM2(IST) größer als die Soll-Drehzahl nM(SL) wird. Bei positiven zweiten Regelabweichungen dR2, welche größer als der zweite Grenzwert GW2 sind, wird der Faktor kp2 auf den Wert GW4 begrenzt. Im Bereich zwischen dem ersten Grenzwert GW1 und dem zweiten Grenzwert GW2 wird der Faktor kp2 auf den Wert Null gesetzt. Aus der Kennlinie 14 wird deutlich, dass bei einem stationären Zustand, d. h. die zweite Regelabweichung dR2 ist nahezu Null, der Faktor kp2 den Wert Null besitzt. Folglich wird der P-Anteil 15 des Drehzahl-Reglers 11 in diesem Fall ausschließlich aus der ersten Regelabweichung dR1 bestimmt. Bei dynamischen Zustandsänderungen, d. h. es liegt eine große negative oder positive zweite Regelabweichung dR2 vor, wirkt der Faktor kp2 auf den P-Anteil 15 des Drehzahl-Reglers 11 ein. Der P-Anteil des leistungsbestimmenden Signals wird nunmehr in Abhängigkeit der ersten Regelabweichung dR1 und den Faktoren kp1 und kp2 berechnet:

$$ve(P) = dR1 \cdot (kp1 + kp2)$$

mit

ve(P)    Proportionaler Anteil des leistungsbestimmenden Signals ve

dR1    erste Regelabweichung

kp1    erster Faktor

kp2    zweiter Faktor

Der Faktor kp1 kann hierbei entweder als Konstante vorgegeben werden oder in Abhängigkeit von der ersten Ist-Drehzahl nM1(IST) und/oder dem I-Anteil ve(I) berechnet werden.

Eine weitere Möglichkeit zur Berechnung des P-Anteils ve(P) ergibt sich, wenn die Regelabweichung dR2 direkt zur Berechnung des P-Anteils 15 verwendet wird:

$$ve(P) = dR1 \cdot kp1 + dR2 \cdot kp2$$

mit

ve(P)    Proportionaler Anteil des leistungsbestimmenden Signals ve
dR1    erste Regelabweichung
dR2    zweite Regelabweichung
kp1    erster Faktor
kp2    zweiter Faktor

Diese Ausführungsform ist in Figur 3 gestrichelt dargestellt. Über die Summation 18 werden der P- und I-Anteil summiert. Die Summe entspricht dem leistungsbestimmenden Signal ve.

In Figur 5 ist eine zweite Ausführungsform der inneren Struktur des Drehzahl-Reglers 11 als Blockschaltbild dargestellt. Im Unterschied zur Figur 3 wird bei dieser Ausführungsform die zweite Regelabweichung dR2 auf den P-Anteil 15 und parallel auf einen DT1-Anteil 17 geführt. Über den DT1-Anteil 17 wird der DT1-Anteil ve(DT1) des leistungsbestimmenden Signals ve berechnet. Über die Summation 18 wird sodann das leistungsbestimmende Signal ve aus den Summanden des P-, I- und DT1-Anteils berechnet. Der DT1-Anteil 17 wird mittels einer Kennlinie 19 berechnet. Diese ist in Figur 6 dargestellt. Auf der Abszisse ist hierbei die Zeit t aufgetragen. Die Ordinate entspricht dem DT1-Anteil ve(DT1) des leistungsbestimmenden Signals ve. Über die Kennlinie 19 wird bei einer sprungförmigen Änderung der zweiten Regelabweichung dR2 dieser ein entsprechender Wert ve(DT1) zugewiesen. In das Diagramm sind zwei Grenzwerte GW1 und GW2 eingezeichnet. Der DT1-Anteil wird deaktiviert, wenn die zweite Regelabweichung dR2 kleiner dem ersten Grenzwert GW1 wird, d. h. das Signal ve(DT1) besitzt dann eine Wertigkeit von Null. Der DT1-Anteil wird aktiviert, wenn die zweite Regelabweichung dR2 größer dem zweiten Grenzwert GW2 wird. Über den Grenzwert GW2 wird bewirkt, dass bei dynamischen Zustandsänderungen, also einer großen positiven oder negativen zweiten Regelabweichung dR2, der DT1-Anteil in die Berechnung des leistungsbestimmenden Signals ve miteingeht. Bei stationären Zuständen, d. h. die zweite Regelabweichung dR2 ist nahezu Null, bestimmt sich das leistungsbestimmende Signal ve ausschließlich aus dem P- und I-Anteil.

**Bezugszeichen**

1    Antriebseinheit
2    Brennkraftmaschine
3    Übertragungsglied
4    Motorlast
5    Elektronisches Steuergerät EDC
6    Kraftstofftank
7    Pumpen
8    Rail
9    Rail-Drucksensor
10    Injektoren
11    Drehzahl-Regler
12    erstes Filter
13    zweites Filter
14    Kennlinie
15    P-Anteil (Proportional-Anteil)
16    I-Anteil (Integral-Anteil)
17    DT1-Anteil
18    Summation
19    Kennlinie

**Patentansprüche**

1.    Verfahren zur Drehzahl-Regelung einer Brennkraftmaschine (2), bei dem aus einer Ist-Drehzahl (nM(IST)) der Brennkraftmaschine (2) mittels eines ersten Filters (12) eine erste gefilterte Ist-Drehzahl (nM1(IST)) berechnet wird, aus einer Soll-Drehzahl (nM(SL)) der Brennkraftmaschine (2) und der ersten gefilterten Ist-Drehzahl (nM1(IST)) eine erste Regelabweichung (dR1) berechnet wird und aus der ersten Regelabweichung (dR1) mittels eines Drehzahl-Reglers (11) ein leistungsbestimmendes Signal (ve) zur Drehzahl-Regelung der Brennkraftmaschine (2) bestimmt wird,
**dadurch gekennzeichnet,**
**dass** aus der Ist-Drehzahl (nM(IST)) der Brennkraftmaschine (2) mittels eines zweiten Filters (13) eine zweite gefilterte Ist-Drehzahl (nM2(IST)) berechnet wird, aus der Soll-Drehzahl (nM(SL)) und der zweiten gefilterten Ist-Drehzahl (nM2(IST)) eine zweite Regelabweichung (dR2) berechnet wird und bei einer dynamischen Zustandsänderung aus der ersten (dR1) und zweiten Regelabweichung (dR2) mittels des Drehzahl-Reglers (11) das leistungsbestimmende Signal (ve) zur Drehzahl-Regelung der Brennkraftmaschine (2) berechnet wird.

2.    Verfahren zur Drehzahl-Regelung einer Brennkraftmaschine (2) nach Anspruch 1,
**dadurch gekennzeichnet,**
**dass** die dynamische Zustandsänderung über die zweite Regelabweichung (dR2) erkannt wird.

3. Verfahren zur Drehzahl-Regelung einer Brennkraftmaschine (2) nach Anspruch 1,
**dadurch gekennzeichnet,**
**dass** der Filterwinkel des zweiten Filters (13) kleiner als der Filterwinkel des ersten Filters (12) ist.

4. Verfahren zur Drehzahl-Regelung einer Brennkraftmaschine (2) nach Anspruch 2,
**dadurch gekennzeichnet,**
**dass** die zweite Regelabweichung (dR2) auf einen P-Anteil (15) des Drehzahl-Reglers (11) einwirkt.

5. Verfahren zur Drehzahl-Regelung einer Brennkraftmaschine (2) nach Anspruch 4,
**dadurch gekennzeichnet,**
**dass** der P-Anteil (15) aus der ersten Regelabweichung (dR1), einem ersten Faktor (kp1) und einem zweiten Faktor (kp2) bestimmt wird, wobei der zweite Faktor (kp2) mittels einer Kennlinie (14) aus der zweiten Regelabweichung (dR2) berechnet wird.

6. Verfahren zur Drehzahl-Regelung einer Brennkraftmaschine (2) nach Anspruch 5,
**dadurch gekennzeichnet,**
**dass** der P-Anteil zusätzlich aus der zweiten Regelabweichung (dR2) berechnet wird.

7. Verfahren zur Drehzahl-Regelung einer Brennkraftmaschine (2) nach einem der Ansprüche 5 oder 6,
**dadurch gekennzeichnet,**
**dass** der erste Faktor (kp1) entweder als Konstante vorgegeben wird oder in Abhängigkeit der ersten gefilterten Drehzahl (nM1(IST)) und/oder eines I-Anteils (ve(I)) berechnet wird.

8. Verfahren zur Drehzahl-Regelung einer Brennkraftmaschine (2) nach Anspruch 2,
**dadurch gekennzeichnet,**
**dass** die zweite Regelabweichung (dR2) auf einen DT1-Anteil (17) des Drehzahl-Reglers (11) einwirkt.

9. Verfahren zur Drehzahl-Regelung einer Brennkraftmaschine (2) nach Anspruch 8,
**dadurch gekennzeichnet,**
**dass** der DT1-Anteil (17) aus der zweiten Regelabweichung (dR2) über eine Kennlinie (19) bestimmt wird.

10. Verfahren zur Drehzahl-Regelung einer Brennkraftmaschine (2) nach Anspruch 9,
**dadurch gekennzeichnet,**
**dass** mittels der Kennlinie (19) der DT1-Anteil (17) deaktiviert wird, wenn die zweite Regelabweichung (dR2) kleiner einem ersten Grenzwert (GW1) wird (dR2 < GW1) und der DT1-Anteil aktiviert wird, wenn die zweite Regelabweichung (dR2) größer einem zweiten Grenzwert (GW2) wird (dR2 > GW2).

## Claims

1. Method for regulating the speed of an internal combustion engine (2), in which method a first filtered actual speed (nM1(IST)) is calculated from an actual speed (nM(IST)) of the internal combustion engine (2) by means of a first filter (12), a first regulating error (dR1) is calculated from a setpoint speed (nM(SL)) of the internal combustion engine (2) and the first filtered actual speed (nM1(IST)), and a power-determining signal (ve) for regulating the speed of the internal combustion engine (2) is determined from the first regulating error (dR1) by means of a speed regulator (11),
**characterized**
**in that** a second filtered actual speed (nM2(IST)) is calculated from the actual speed (nM(IST)) of the internal combustion engine (2) by means of a second filter (13), a second regulating error (dR2) is calculated from the setpoint speed (nM(SL)) and the second filtered actual speed (nM2(IST)) and, in the event of a dynamic change in state, the power-determining signal (ve) for regulating the speed of the internal combustion engine (2) is calculated from the first regulating error (dR1) and second regulating error (dR2) by means of the speed regulator (11).

2. Method for regulating the speed of an internal combustion engine (2) according to Claim 1,
**characterized**
**in that** the dynamic change in state is detected by means of the second regulating error (dR2).

3. Method for regulating the speed of an internal combustion engine (2) according to Claim 1,
**characterized**
**in that** the filter angle of the second filter (13) is smaller than the filter angle of the first filter (12).

4. Method for regulating the speed of an internal combustion engine (2) according to Claim 2,
**characterized**
**in that** the second regulating error (dR2) influences a P factor (15) of the speed regulator (11).

5. Method for regulating the speed of an internal combustion engine (2) according to Claim 4,
**characterized**
**in that** the P factor (15) is determined from the first regulating error (dR1), a first factor (kp1) and a second factor (kp2), with the second factor (kp2) being calculated from the second regulating error (dR2) by means of a characteristic curve (14).

6. Method for regulating the speed of an internal combustion engine (2) according to Claim 5, **characterized in that** the P factor is additionally calculated from the second regulating error (dR2).

7. Method for regulating the speed of an internal combustion engine (2) according to one of Claims 5 or 6, **characterized in that** the first factor (kp1) is either predefined as a constant or is calculated as a function of the first filtered speed (nM1(IST)) and/or an I factor (ve(I)).

8. Method for regulating the speed of an internal combustion engine (2) according to Claim 2, **characterized in that** the second regulating error (dR2) influences a DT1 factor (17) of the speed regulator (11).

9. Method for regulating the speed of an internal combustion engine (2) according to Claim 8, **characterized in that** the DT1 factor (17) is determined from the second regulating error (dR2) by means of a characteristic curve (19).

10. Method for regulating the speed of an internal combustion engine (2) according to Claim 9, **characterized in that**, by means of the characteristic curve (19), the DT1 factor (17) is deactivated if the second regulating error (dR2) becomes smaller than a first limit value (GW1) (dR2 < GW1) and the DT1 factor is activated if the second regulating error (dR2) becomes greater than a second limit value (GW2) (dR2 > GW2).

**Revendications**

1. Procédé de régulation du régime d'un moteur à combustion interne (2), dans lequel un premier régime effectif filtré (nM1(IST)) est calculé au moyen d'un premier filtre (12) à partir du régime effectif (nM(IST)) du moteur à combustion interne (2), un premier écart de réglage (dR1) est calculé à partir d'un régime de consigne (nM(SL)) du moteur à combustion interne (2) et du premier régime effectif filtré (nM1(IST)), un signal (ve) de détermination de puissance utilisé pour réguler le régime du moteur à combustion interne (2) est déterminé à partir du premier écart de réglage (dR1) au moyen d'un régulateur de régime (11), **caractérisé en ce que** un deuxième régime effectif filtré (nM2(IST)) est calculé au moyen d'un deuxième filtre (13) à partir du régime effectif (nM(IST)) du moteur à combustion interne (2), **en ce qu'**un deuxième écart de réglage (dR2) est calculé à partir du régime de consigne (nM(SL)) et du deuxième régime effectif filtré (nM2(IST)) et **en ce qu'**en cas de modification dynamique d'état, le signal (ve) de détermination de puissance qui assure la régulation du régime du moteur à combustion interne (2) est calculé au moyen du régulateur de régime (11) à partir du premier écart de réglage (dR1) et du deuxième écart de réglage (dR2).

2. Procédé de régulation du régime d'un moteur à combustion interne (2) selon la revendication 1, **caractérisé en ce que** la modification dynamique d'état est détectée par l'intermédiaire du deuxième écart de réglage (dR2).

3. Procédé de régulation du régime d'un moteur à combustion interne (2) selon la revendication 1, **caractérisé en ce que** l'angle de filtrage du deuxième filtre (13) est inférieur à l'angle de filtrage du premier filtre (12).

4. Procédé de régulation du régime d'un moteur à combustion interne (2) selon la revendication 2, **caractérisé en ce que** le deuxième écart de réglage (dR2) agit sur une partie P (15) du régulateur de régime (11).

5. Procédé de régulation du régime d'un moteur à combustion interne (2) selon la revendication 4, **caractérisé en ce que** la partie P (15) est déterminée à partir du premier écart de réglage (dR1), d'un premier facteur (kp1) et d'un deuxième facteur (kp2), le deuxième facteur (kp2) étant calculé à partir du deuxième écart de réglage (dR2) au moyen d'une ligne caractéristique (14).

6. Procédé de régulation du régime d'un moteur à combustion interne (2) selon la revendication 5, **caractérisé en ce que** la partie P est de plus calculée à partir du deuxième écart de réglage (dR2).

7. Procédé de régulation du régime d'un moteur à combustion interne (2) selon l'une des revendications 5 ou 6, **caractérisé en ce que** le premier facteur (kp1) est soit prédéterminé en tant que constante soit calculé en fonction du premier régime filtré (nM1(IST)) et/ou d'une partie I (ve(I)).

8. Procédé de régulation du régime d'un moteur à combustion interne (2) selon la revendication 2, **caractérisé en ce que** le deuxième écart de réglage (dR2) agit sur une partie DT1 (17) du régulateur de régime (11).

9. Procédé de régulation du régime d'un moteur à combustion interne (2) selon la revendication 8, **carac-**

**térisé en ce que** la partie DT1 (17) est déterminée à partir du deuxième écart de réglage (dR2) par l'intermédiaire d'une ligne caractéristique (19).

10. Procédé de régulation du régime d'un moteur à combustion interne (2) selon la revendication 9, **caractérisé en ce qu'**au moyen de la ligne caractéristique (19), la partie Dt1 (17) est désactivée lorsque le deuxième écart de réglage (dR2) est inférieur à une première valeur limite (GW1) (dR2 < GW1) et **en ce que** la partie DT1 est activée lorsque le deuxième écart de réglage (dR2) est plus grand qu'une deuxième valeur limite (GW2) (dR2 > GW2).

**Fig. 1**

**Fig. 2**

**Fig. 3**

**Fig. 4**

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0059585 B1
- DE 19953767 C2